# EUROPÄISCHE PATENTANMELDUNG

(11) **EP 4 030 095 A1**
(43) Veröffentlichungstag der Anmeldung: **20.07.2022**
(21) Anmeldenummer: 21151276.9
(22) Anmeldetag: 13.01.2021
(51) Int. Cl.: F17C 1/16

(54) **VERFAHREN ZUR HERSTELLUNG EINES HOHLKÖRPERS**

(71) Anmelder: Magna Energy Storage Systems GesmbH, 8261 Sinabelkirchen (AT)
(72) Erfinder: PUCHLEITNER, Rainer, 8052 Graz (AT); PUNTIGAM, David, 8522 Gross St.Florian (AT)
(74) Vertreter: Zangger, Bernd

(57) **Zusammenfassung**

Ein Verfahren zur Herstellung eines Hohlkörpers zur Speicherung von Gasen, wobei der Hohlkörper zumindest ein Bossteil (1) mit einer Auskragung (2) umfasst, wobei der Hohlkörper durch Blasformen hergestellt wird, wobei das Bossteil (1) mit einem Kunststoff oder einem reaktiven Material als Ummantelung (3), zumindest in einem Bereich der Auskragung (2), ummantelt wird und erwärmt wird, dann das erwärmte, ummantelte Bossteil (1) in ein Blaswerkzeug (4) eingebracht wird und mit einem Kunststoffschlauch (5) zur Ausbildung des Hohlkörpers umgeben wird, dann der Kunststoffschlauch (5) mit der Ummantelung (3) an der Auskragung (2) des Bossteils (1) dauerhaft in Kontakt gebracht wird, so dass sich der Kunststoff des Kunststoffschlauchs (5) mit dem Kunststoff oder dem reaktiven Material der Ummantelung (3) dauerhaft stoffschlüssig verbinden, wobei durch Aufbringen eines Innendrucks der Kunststoff des Kunststoffschlauchs (5) in seine finale Form des Hohlkörpers gebracht wird.

## Beschreibung

### Gebiet der Erfindung

Die vorliegende Erfindung betrifft ein Verfahren zur Herstellung eines Hohlkörpers zur Speicherung von Gasen.

### Stand der Technik

Es ist bekannt das Hohlkörper zur Speicherung von Gasen, die insbesondere Hochdruckbehälter bilden können, beispielsweise zum Speichern von Wasserstoff als Kraftstoff für Kraftfahrzeuge, aus einer innenliegenden Schicht, dem sogenannten "Liner", und einer Wicklung von Fasermaterial um den Liner herum aufgebaut werden können.

Zur Herstellung eines Behälters ist es bekannt, die Technologien des Blasformens und Thermoformens einzusetzen. Die Herstellung beruht dann auf der Umformung von schlauch- oder plattenförmigen Halbzeugen. Diese werden durch Unterdruck und/oder Überdruck in ihre finale Form gebracht. Beispielsweise können zwei Halbschalen erzeugt werden, die aneinander gefügt werden, um einen Behälter zu bilden.

Für den Anwendungsfall von gasdichten Linern für Typ-IV Behälter, die zur Druckspeicherung von Gasen eingesetzt werden, gibt es zwei gängige Produktionsmethoden. Zum einen das Blasformen von ganzen Linern, zum anderen die Methode der Herstellung von Segmenten des Behälters im Spritzguss und Extrusionsverfahren sowie eine nachgeschaltete Verbindung dieser Komponenten durch ein Fügeverfahren.

Die hierbei zum Einsatz kommenden Werkstoffe sind zumeist auf Basis von HDPE (High Density Polyethylen) oder Polyamiden.

Ein wichtiges Unterscheidungsmerkmal für Linerwerkstoffe sind die mechanischen Tieftemperatureigenschaften sowie die Emissionseigenschaften. Monolayermaterialien wie Polyamid verfügen über eine gute Sperreigenschaft für Gase, jedoch nicht über optimale Tieftemperatureigenschaften. HDPE hingegen verfügt über keine geeignete Sperrwirkung, jedoch über sehr gute Tieftemperatureigenschaften.

Speziell für Anwendungen im Bereich Wasserstoff kommt aus diesem Grund aktuell hauptsächlich Polyamid zum Einsatz. Jedoch sind dadurch vor allem für Blasformtechnologie Grenzen im Hinblick auf Bauteilgröße gesetzt. Die verfügbaren geeigneten Typen sind auf Grund ihrer aufwändigen Additivierung überdies teuer und problematisch beim Einsatz bei tiefen Temperaturen.

Hochdruckbehälter für Gase unterliegen im Zuge ihres Betriebs (Befüllen, Speichern und Entleeren) großen Temperaturschwankungen. Dies stellt hohe Anforderungen an die Materialien und im Speziellen an den Liner dar.

In Verbindung mit der Leichtbauweise und der Verwendung von Verbundwerkstoffen stellt sich in diesem Zusammenhang die Herausforderung die unterschiedlichen Materialien an der Fügestelle gasdicht miteinander zu verbinden.

### Zusammenfassung der Erfindung

Es ist eine Aufgabe der Erfindung, ein Verfahren zur Herstellung eines Hohlkörpers zur Speicherung von Gasen anzugeben, das einfach und kostengünstig durchgeführt werden kann und das es ermöglicht, die Anforderungen an Dichtheit und Permeation für einen Hochdruckbehälter zu erfüllen.

Die Lösung der Aufgabe erfolgt durch ein Verfahren zur Herstellung eines Hohlkörpers zur Speicherung von Gasen, wobei der Hohlkörper zumindest ein Bossteil mit einer Auskragung umfasst, wobei der Hohlkörper durch Blasformen hergestellt wird, wobei das Bossteil mit einem Kunststoff oder einem reaktiven Material als Ummantelung, zumindest in einem Bereich der Auskragung, ummantelt wird und erwärmt wird, dann das erwärmte, ummantelte Bossteil in ein Blaswerkzeug eingebracht wird und mit einem Kunststoffschlauch zur Ausbildung des Hohlkörpers umgeben wird, dann der Kunststoffschlauch mit der Ummantelung an der Auskragung des Bossteils dauerhaft in Kontakt gebracht wird, so dass sich der Kunststoff des Kunststoffschlauchs mit dem Kunststoff oder dem reaktiven Material der Ummantelung dauerhaft stoffschlüssig verbinden, wobei durch Aufbringen eines Innendrucks der Kunststoff des Kunststoffschlauchs in seine finale Form des Hohlkörpers gebracht wird.

Erfindungsgemäß wird ein Bossteil, dass bevorzugt aus Metall bestehen kann, dicht in einen Kunststoff der die Behälterwand ausbildet, insbesondere in einen sogenannten "Liner" des Behälters, eingebunden in dem das Bossteil bereits vor der Verbindung mit der Behälterwand mit einem geeigneten Kunststoffmaterial oder reaktiven Material überzogen, beispielsweise umspritzt und somit ummantelt wird und erwärmt wird. Der warme bzw. heiße Kunststoff bzw. reaktive Material des Bossteils kann dann eine gute stoffschlüssige Verbindung mit dem Kunststoff, der die Behälterwand ausbildet, eingehen. Dazu wird der Kunststoffschlauch mit dem ummantelnden Kunststoff oder reaktiven Material an der Auskragung des Bossteils dauerhaft in Kontakt gebracht, zum Beispiel miteinander verpresst. Diese Anbindung eines Bossteils an den Liner des Behälters kann eine hohe Dichtheit, bevorzugt auch auch Permeationsdichtheit gegenüber einem unerwünschten Gasaustritt, sicherstellen und kann dabei dennoch einfach und kostengünstig hergestellt werden.

Ein "reaktives Material" ist dabei ein Material, dass zumindest nach dessen Erwärmung eine stoffschlüssige Verbindung mit dem Kunststoff des Kunststoffschlauchs, der den Hohlkörper bildet, eingehen kann. Das reaktive Material oder der ummantelnde Kunststoff kann beispielsweise als Beschichtung vorliegen.

Der hergestellte Hohlkörper weist bevorzugt im Wesentlichen eine Zylinderform auf. Die "Auskragung" ist bevorzugt ein axialer Abschnitt des Bossteils mit einem größeren Durchmesser, als andere axiale Abschnitte des Bossteils und erstreckt sich vorzugsweise etwa normal zu einer Längsachse des Bossteils und/oder zu einer Längsachse des hergestellten Behälters.

Vorzugsweise wird der Kunststoffschlauch mit der Ummantelung zumindest an einer, vom Behälterinneren abgewandten, Außenseite der Auskragung des Bossteils dauerhaft in Kontakt gebracht.

Der Kunststoffschlauch kann mit der Ummantelung an der Auskragung des Bossteils durch eine axiale Hubbewegung des Bossteils relativ zum Blaswerkzeug dauerhaft in Kontakt gebracht werden.

Bevorzugt wird der Kunststoffschlauch mit der Ummantelung an der Auskragung des Bossteils so dauerhaft in Kontakt gebracht, dass die Auskragung des Bossteils relativ zum Blaswerkzeug auf eine definierte Nähe gebracht wird, also so nahe herangefahren bzw. herangedrückt, dass die beiden Kunststoffe bzw. Materialien, des Bossteils einerseits und der Behälterwand andererseits, in einem gewünschten Maß miteinander verpresst werden.

Das Bossteil kann mit der Ummantelung durch Umspritzen des Bossteils ummantelt werden. Allgemein kann das Ummanteln durch Beschichten erfolgen. Die Ummantelung, Beschichtung und/oder Umspritzung kann zumindest in einem Bereich der Auskragung erfolgen, bevorzugt zumindest in einem Bereich an der Außenseite der Auskragung des Bossteils.

Das Bossteil weist bevorzugt eine für das Haften des Kunststoffs der Ummantelung vorpräparierte, insbesondere poröse, Oberfläche auf.

Bevorzugt wird nach dem Einbringen des ummantelte Bossteil in das Blaswerkzeug und dem Umgeben des Bossteils mit dem Kunststoffschlauch zur Ausbildung des Hohlkörpers, das Blaswerkzeug geschlossen, insbesondere können zwei Werkzeughälften, nämlich zwei Formhälften, geschlossen werden, wobei bevorzugt durch das Schließen des Blaswerkzeuges der Kunststoffschlauch mit der Ummantelung an der Auskragung des Bossteils zumindest teilweise und/oder zumindest temporär, optional auch bereits dauerhaft, in Kontakt gebracht wird.

Das Aufbringen des Innendrucks, um den Kunststoff des Kunststoffschlauchs in seine finale Form des Hohlkörpers zu bringen, kann nach dem dauerhaften In-Kontakt-Bringen des Kunststoffschlauchs mit der Ummantelung an der Auskragung des Bossteils erfolgen. Alternativ oder zusätzlich kann schon vor dem dauerhaften In-Kontakt-Bringen des Kunststoffschlauchs mit der Ummantelung an der Auskragung des Bossteils das Aufbringen des Innendrucks, um den Kunststoff des Kunststoffschlauchs in seine finale Form des Hohlkörpers zu bringen, erfolgen.

Vorzugsweise umfasst das Blaswerkzeug zwei Werkzeughälften, nämlich zwei Formhälften, und einen Blasdorn, wobei der ummantelte Bossteil auf den Blasdorn des Blaswerkzeugs aufgebracht wird und der Kunststoffschlauch zwischen die Werkzeughälften und um den Blasdorn extrudiert wird, um das Bossteil zu umgeben.

Der Kunststoffschlauch besteht bevorzugt aus einem permeationsdichten Mehrschichtkunststoff und umfasst vorzugsweise zumindest eine Barriereschicht für Gase, wie Kohlenwasserstoffe.

Der Kunststoff des Kunststoffschlauchs kann bevorzugt High Density Polyethylen (HDPE) umfassen.

Nach dem Aufbringen des Innendrucks, um den Kunststoff des Kunststoffschlauchs in seine finale Form des Hohlkörpers zu bringen, wird der Kunststoff des Hohlkörpers bevorzugt mit einem Faserverbundwerkstoff umwickelt, um dem Behälter eine hohe mechanische Festigkeit zu verleihen. Der Faserverbundwerkstoff kann bevorzugt Kohlefasern, Glasfasern und/oder Epoxidharz enthalten.

### Kurzbeschreibung der Zeichnungen

Die Erfindung wird im Folgenden beispielhaft unter Bezugnahme auf die Zeichnungen beschrieben.
- Fig. 1: ist eine schematische Schnittdarstellung eines ersten Verfahrensschrittes in einem erfindungsgemäßen Verfahren zur Herstellung eines Hohlkörpers.
- Fig. 2: ist eine schematische Schnittdarstellung eines zweiten Verfahrensschrittes in einem erfindungsgemäßen Verfahren zur Herstellung eines Hohlkörpers.
- Fig. 3: ist eine schematische Schnittdarstellung eines dritten Verfahrensschrittes in einem erfindungsgemäßen Verfahren zur Herstellung eines Hohlkörpers.
- Fig. 4: ist eine schematische Schnittdarstellung eines vierten Verfahrensschrittes in einem erfindungsgemäßen Verfahren zur Herstellung eines Hohlkörpers.

### Detaillierte Beschreibung der Erfindung

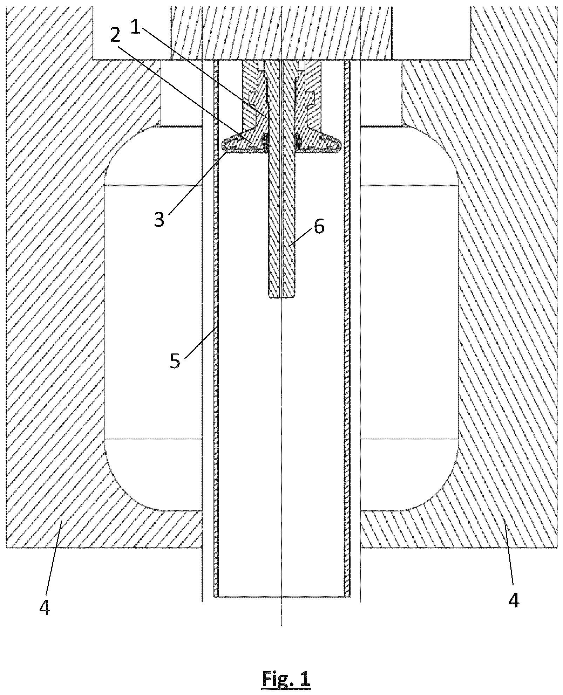

In den Fig. 1-4 sind Schritte eines erfindungsgemäßen Verfahrens zur Herstellung eines Hohlkörpers, in der zeitlichen Reihenfolge von Fig. 1 bis Fig. 4, dargestellt. Dabei wird als Ummantelung die Verwendung eines ummantelnden Kunststoffs beschrieben. Es kann jedoch auch eine reaktive Schicht als Ummantelung verwendet werden.

Fig. 1 zeigt, wie ein aufgewärmtes Einlegeteil, nämlich ein Bossteil 1 mit einer Auskragung 2 an einem dem Inneren des späteren Behälters zugewandten Fußende des Bossteils 1, wobei das Bossteil 1 im Bereich der Auskragung 2 mit einem Kunststoff als Ummantelung 3 ummantelt ist, händisch oder durch eine geeignete automatisierte Vorrichtung an einem Blasdorn 6 eines Blaswerkzeugs 4 befestigt und in Position gebracht wurde.

Das Blaswerkzeug 4 umfasst zusätzlich zum zentralen Blasdorn 6 auch zwei Werkzeughälften, die Formhälften zur Ausformung des Hohlkörpers bilden. Die Werkzeughälften befinden sich zunächst, in Fig. 1, in geöffneter Position. Ein Kunststoffschlauch 5 wird in das geöffnete Blaswerkzeug 4 ausgestoßen, insbesondere extrudiert.

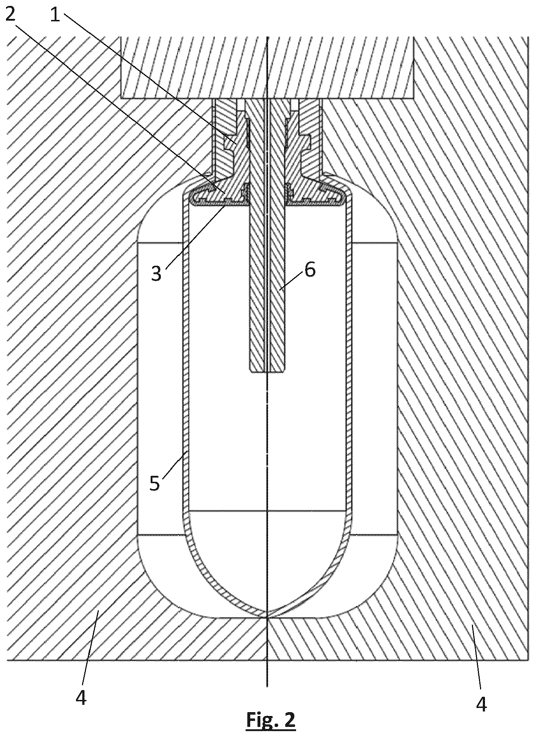

In Fig. 2 ist dargestellt, dass die Werkzeughälften des Blaswerkzeugs 4 geschlossen wurden. Hierbei legt sich im oberen Bereich des Bossteils 1 der Kunststoffschlauch 5 bereits grob an die Außenkontur des Bossteils 1, insbesondere an der Außenseite der Auskragung 2, an. Der Kunststoffschlauch 5 wird mit dem ummantelnden Kunststoff 3 an der Auskragung 2 des Bossteils 1 zumindest teilweise und/oder zumindest temporär - oder auch bereits dauerhaft - in Kontakt gebracht.

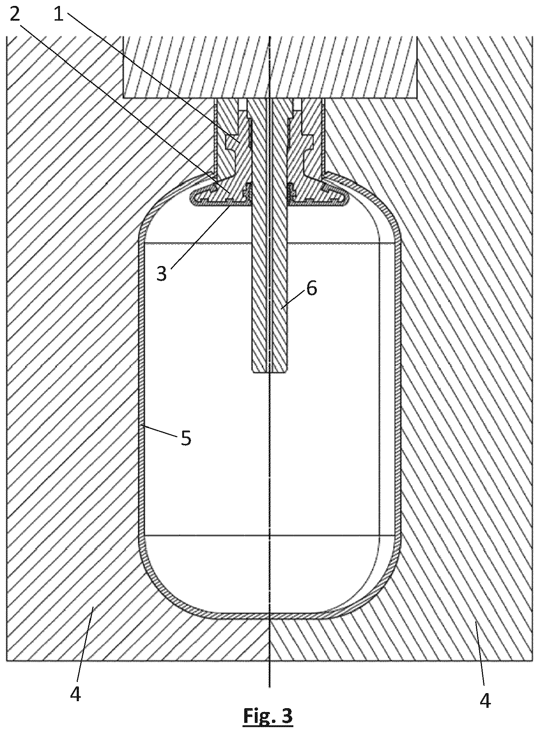

In einem nächsten Schritt kann, wie in Fig. 3 dargestellt, durch Blasformen der Kunststoff des Kunststoffschlauchs 5 an die Form des geschlossenen Blaswerkzeugs 4 gedrückt werden, um diesen schon - zumindest annähernd - in die Form des gewünschten Hohlkörpers zu bringen. Hierbei kann sich eventuell der Kunststoff des Kunststoffschlauchs 5 von dem ummantelnden Kunststoff 3 an der Auskragung 2 des Bossteils 1 zumindest teilweise wieder ablösen.

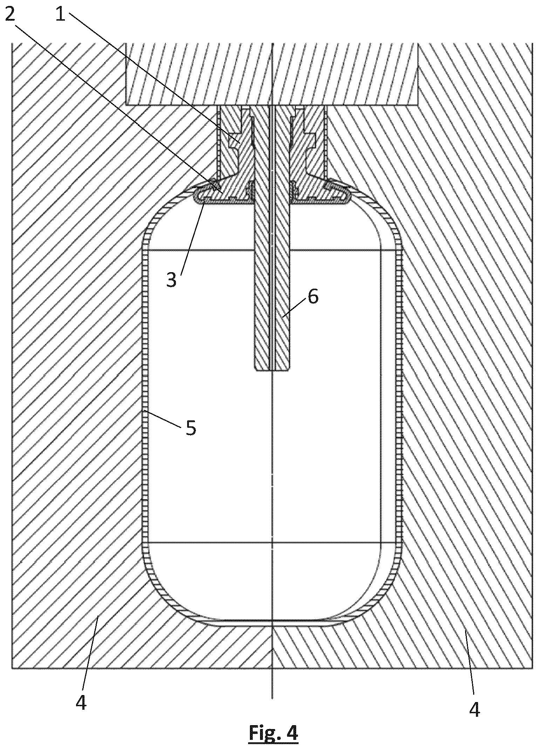

Wie in Fig. 4 dargestellt, wird durch einen vertikalen Hub des Bossteils 1 relativ zum Außenwerkzeug, also zu den Formhälften des Blaswerkzeugs 4, an der Außenseite der Auskragung 2 das Bossteil 1, insbesondere die Kunststoff-Umspritzung 3, und der Kunststoffschlauch 5 auf einen definierten Querschnitt verpresst. Hierbei kommt es zu einer dauerhaften stoffschlüssigen Verbindung der Umspritzung 3 des Bossteils 1 und des Schlauches 5 im verpressten Bereich.

Nach erfolgter Verpressung und Verschweißung im oberen Bereich des Bossteils 1 wird der Liner, also der Kunststoffschlauch 5, durch Aufbringen eines Innendruckes in seine finale Form gebracht.

Der in Fig. 3 beschriebene Schritt kann auch entfallen, so dass das Aufbringen eines Innendrucks in den Kunststoffschlauch 5 um diesen in die Form des gewünschten Hohlkörpers zu bringen lediglich ein Mal erfolgt, nämlich nach dem Verpressen des Kunststoffs 3, der den Bossteil 1 ummantelt, mit dem Kunststoffschlauch 5. Alternativ kann das Aufbringen des Innendrucks beispielsweise auch schon vor dem Verpressen beginnen und kann das Verpressen der Kunststoffe 3, 5 beispielsweise während dem Aufbringen des Innendrucks, also während dem Blasformen erfolgen.

### Bezugszeichenliste

- 1: Bossteil
- 2: Auskragung
- 3: Ummantelung (Kunststoff oder reaktives Material)
- 4: Blaswerkzeug
- 5: Kunststoffschlauch
- 6: Blasdorn

## Patentansprüche

1. Verfahren zur Herstellung eines Hohlkörpers zur Speicherung von Gasen, wobei der Hohlkörper zumindest ein Bossteil (1) mit einer Auskragung (2) umfasst, wobei der Hohlkörper durch Blasformen hergestellt wird,
**dadurch gekennzeichnet, dass** das Bossteil (1) mit einem Kunststoff oder einem reaktiven Material als Ummantelung (3), zumindest in einem Bereich der Auskragung (2), ummantelt wird und erwärmt wird, dann das erwärmte, ummantelte Bossteil (1) in ein Blaswerkzeug (4) eingebracht wird und mit einem Kunststoffschlauch (5) zur Ausbildung des Hohlkörpers umgeben wird, dann der Kunststoffschlauch (5) mit der Ummantelung (3) an der Auskragung (2) des Bossteils (1) dauerhaft in Kontakt gebracht wird, so dass sich der Kunststoff des Kunststoffschlauchs (5) mit dem Kunststoff oder dem reaktiven Material der Ummantelung (3) dauerhaft stoffschlüssig verbinden, wobei durch Aufbringen eines Innendrucks der Kunststoff des Kunststoffschlauchs (5) in seine finale Form des Hohlkörpers gebracht wird.

2. Verfahren nach Anspruch 1,
**dadurch gekennzeichnet, dass** der Kunststoffschlauch (5) mit der Ummantelung (3) zumindest an einer vom Behälterinneren abgewandten Außenseite der Auskragung (2) des Bossteils (1) dauerhaft in Kontakt gebracht wird.

3. Verfahren nach zumindest einem der vorhergehenden Ansprüche,
**dadurch gekennzeichnet, dass** der Kunststoffschlauch (5) mit der Ummantelung (3) an der Auskragung (2) des Bossteils (1) durch eine axiale Hubbewegung des Bossteils (1) relativ zum Blaswerkzeug (4) dauerhaft in Kontakt gebracht wird.

4. Verfahren nach zumindest einem der vorhergehenden Ansprüche,
**dadurch gekennzeichnet, dass** der Kunststoffschlauch (5) mit der Ummantelung (3) an der Auskragung (2) des Bossteils (1) so dauerhaft in Kontakt gebracht wird, dass die Auskragung (2) des Bossteils (1) relativ zum Blaswerkzeug (4) auf eine definierte Nähe gebracht wird, so dass der Kunststoff des Kunststoffschlauchs (5) mit dem Kunststoff oder dem reaktiven Material der Ummantelung (3) verpresst wird.

5. Verfahren nach zumindest einem der vorhergehenden Ansprüche,
**dadurch gekennzeichnet, dass** das Bossteil (1) mit der Ummantelung (3), zumindest in einem Bereich der Auskragung (2), ummantelt wird durch Umspritzen des Bossteils (1), wobei das Bossteil (1) bevorzugt eine für das Haften der Ummantelung (3) vorpräparierte, insbesondere poröse, Oberfläche aufweist.

6. Verfahren nach zumindest einem der vorhergehenden Ansprüche,
**dadurch gekennzeichnet, dass** nach dem Einbringen des ummantelte Bossteil (1) in das Blaswerkzeug (4) und dem Umgeben des Bossteils (1) mit dem Kunststoffschlauch (5) zur Ausbildung des Hohlkörpers, das Blaswerkzeug (4) geschlossen wird, wobei bevorzugt durch das Schließen des Blaswerkzeuges (4) der Kunststoffschlauch (5) mit der Ummantelung (3) an der Auskragung (2) des Bossteils (1) zumindest teilweise und/oder zumindest temporär bereits in Kontakt gebracht wird.

7. Verfahren nach zumindest einem der vorhergehenden Ansprüche,
**dadurch gekennzeichnet , dass** das Aufbringen eines Innendrucks um den Kunststoff des Kunststoffschlauchs (5) in seine finale Form des Hohlkörpers zu bringen nach dem dauerhaften In-Kontakt-Bringen des Kunststoffschlauchs (5) mit der Ummantelung (3) an der Auskragung (2) des Bossteils (1) erfolgt und/oder vor dem dauerhaften In-Kontakt-Bringen des Kunststoffschlauchs (5) mit der Ummantelung (3) an der Auskragung (2) des Bossteils (1) erfolgt.

8. Verfahren nach zumindest einem der vorhergehenden Ansprüche,
**dadurch gekennzeichnet , dass** das Blaswerkzeug (4) zwei Werkzeughälften und einen Blasdorn (6) umfasst, wobei der ummantelte Bossteil (1) auf den Blasdorn (6) des Blaswerkzeugs (4) aufgebracht wird und der Kunststoffschlauch (5) zwischen die Werkzeughälften (4) und um den Blasdorn (6) extrudiert wird, um das Bossteil (1) zu umgeben.

9. Verfahren nach zumindest einem der vorhergehenden Ansprüche,
**dadurch gekennzeichnet , dass** der Kunststoffschlauch (5) aus einem permeationsdichten Mehrschichtkunststoff gebildet ist.

10. Verfahren nach zumindest einem der vorhergehenden Ansprüche,
**dadurch gekennzeichnet , dass** nach dem Aufbringen eines Innendrucks, um den Kunststoff des Kunststoffschlauchs (5) in seine finale Form des Hohlkörpers zu bringen, der Kunststoff des Hohlkörpers mit einem Faserverbundwerkstoff umwickelt wird.
